# EUROPÄISCHE PATENTANMELDUNG

(11) **EP 1 316 488 A2**
(43) Veröffentlichungstag der Anmeldung: **04.06.2003**
(21) Anmeldenummer: 02020120.8
(22) Anmeldetag: 07.09.2002
(51) Int. Cl.: B60T 8/00

(54) **Verfahren zur Bestimmung der maximal übertragbaren Kraft sowie deren Verwendung zur Regelung eines Anti-Blockier-Systems**

(30) Priorität: 30.11.2001 DE 10158906
(71) Anmelder: Continental Aktiengesellschaft, 30165 Hannover (DE)
(72) Erfinder: Kluge, Stefan, Dr., 30823 Garbsen (DE)

(57) **Zusammenfassung**

Die Erfindung betrifft ein Verfahren zur Bestimmung der maximal übertragbaren Kraft einem Reifen und einem Fahrbahnbelag beim Bremsen oder Beschleunigen eines Fahrzeuges. Aufgabe der Erfindung ist es, eine möglichst unmittelbare Bestimmung der maximal übertragbaren Kraft zu erreichen, um eine möglichst schnelle Regelung eines Anti-Blockier-Systemes oder einer Anti-Schlupf-Regelung zu ermöglichen. Diese Aufgabe wird dadurch gelöst, dass beim Bremsen oder Beschleunigen der Schallpegel in der Umgebung des Reifens gemessen wird und dass anhand einer zuvor ermittelten µ-Schlupf-Kurve die Amplitude (A) des gemessenen Schallpegels als Regelgröße eines ABS-Systems oder einer Anti-Schlupf-Regelung verwendet wird.

## Beschreibung

Die Erfindung betrifft ein Verfahren zur Bestimmung der maximal übertragbaren Kraft zwischen einem Reifen und einem Fahrbahnbelag, insbesondere beim Bremsen oder Beschleunigen eines Fahrzeuges. Die Erfindung betrifft ebenfalls eine Verwendung der so ermittelten Bremskraft zur Regelung eines Anti-Blockier-Systems.

In herkömmlichen ABS-Regelsystemen wird das Maximum einer µ-Schlupf-Kurve eines Kraftfahrzeugreifens ausgenutzt, indem der Bremsdruck soweit gesteigert wird, dass sich das Rad kurz vor dem Blockieren befindet. Die Radverzögerung wird dabei über einen Radsensor gemessen, der die Drehrate beziehungsweise die Drehgeschwindigkeit des Rades misst. Beim ersten Anbremsen ist der maximal mögliche Kraftschluss unbekannt und muss zunächst ermittelt werden; dies geschieht durch Überschreiten des Maximums der µ-Schlupf-Kurve soweit, dass das Rad in einen Bereich hohen Schlupfes (20 bis 30%) gebracht wird, bis dieses anfängt zu blockieren. In den folgenden Regelzyklen wird dann langsam an den optimalen Punkt der µ-Schlupf-Kurve herangeregelt, um eine möglichst hohe Ausnutzung der Reibkraft zu gewährleisten, die der Reifen anbietet.

Diese Art der Regelung benutzt nur die Verzögerung der Felge als Regelgröße und berücksichtigt nicht die eigentliche Kraftübertragung, die in der Bodenaufstandsfläche des Reifens stattfindet.

Aufgabe der vorliegenden Erfindung ist es, eine möglichst unmittelbare Bestimmung der maximal übertragbaren Kraft zu erreichen, um insbesondere eine möglichst schnelle Regelung eines Anti-Blockier-Systemes zu ermöglichen. Alternativ dazu kann das Verfahren als Anti-Schlupf-Regelung eingesetzt werden.

Erfindungsgemäß wird dies durch ein Verfahren mit dem Merkmal eines Anspruchs 1 sowie einer Verwendung der ermittelten Werte nach Anspruch 7 erreicht.

In den Unteransprüchen sind vorteilhafte Ausgestaltungen und Weiterbildungen des Verfahrens beziehungsweise der Verwendung beschrieben.

Durch die Messung des Schallpegels in der Umgebung des Reifens beim Bremsen wird auf Grund des proportionalen Zusammenhangs zwischen der Schallamplitude und des Schlupfes eine Direktmessung beziehungsweise unmittelbare Bestimmung der maximal übertragbaren Kraft möglich. Das Signal wird somit direkt in der Kontaktzone zwischen dem Reifen und der Fahrbahn ermittelt und wird nicht über eine Torsion des Reifens beziehungsweise der Reifenseitenwand an die Felge und über diese über den Radsensor zeitverzögert weitergegeben. Eine sehr zeitnahe Bestimmung ist durch dieses Verfahren möglich.

Beim Anbremsen wird die µ-Schlupf-Kurve ermittelt, indem das Rad in einen Bereich hohen Schlupfes gebracht wird. Daraus werden dann die Daten für die gegenwärtigen Bedingungen der µ-Schlupf-Kurve ermittelt. Auf Grund dieses Kurvenverlaufes der µ-Schlupf-Kurve ist eine optimierte Steuerung und Regelung des ABS-Systemes möglich, da z.B. bei hohen µ-Werten der Gradient des Ansteigens der Bremskraftkopplung größer gewählt werden kann.

Zur Bestimmung des Schlupfes ist es vorgesehen, dass mit Radsensoren die Raddrehzahl der Fahrzeugräder erfasst wird und dass die von den Radsensoren übermittelten Signale einem Steuergerät zur Auswertung zugeführt werden. Über einen Algorithmus wird aus den verschiedenen Radsignalen die Absolutgeschwindigkeit des Fahrzeuges errechnet und aus der Differenz der jeweiligen Radgeschwindigkeiten zu der Absolutgeschwindigkeit des Fahrzeuges wird der Schlupf errechnet. Die Ermittlung des Schlupfes ist erforderlich, um anhand dieses Wertes das Maximum der µ-Schlupf-Kurve zu fixieren.

Vorteilhafterweise wird der Kraftschluß während einer Regelbremsung bei jedem Wechsel des Straßenbelages bestimmt, wobei der Wechsel des Straßenbelages auf Grund des verschiedenen Abrollgeräusches ermittelt werden kann. Eine erneute µ-Wert Ermittlung ist notwendig, da ein Wechsel des Straßenbelages oder eine Veränderung der Umweltbedingungen zu einem Verlust der einmal ermittelten maximalen Bremskraft führt. Dazu ist es weiterhin notwendig, dass Zusatzparameter wie Fahrgeschwindigkeit, Temperatur oder Feuchtigkeit ermittelt und berücksichtigt werden, da die übertragbare Bremskraft von diesen Zusatzparametern abhängen.

In einer vorteilhaften Verwendung der durch das oben beschriebene Verfahren ermittelten, maximal übertragbaren Kraft werden diese zur Regelung eines Anti-Blockier-Systemes eingesetzt, indem über die gemessene Amplitude des Schallpegels der Gradient des Ansteigens der Bremskraftkopplung bestimmt wird. Bei hohen Kraftschlüssen ist der Gradient steiler, so dass die Bremskraft schneller ansteigen kann. Auf diese Weise kann schneller an das Maximum der übertragbaren Bremskraft herangeregelt werden, was insgesamt zu einer Verkürzung des Bremsweges beiträgt.

In einer Weiterbildung der Erfindung ist vorgesehen, dass beim ersten Bremsen bis zum Blockieren des Rades im Bereich von 8 bis 35 % Schlupf aus einer voreingestellten µ-Schlupf-Kurve gebremst wird und dass auf Grund der durch die erste Bremsung erhaltenen Daten eine angepasste µ-Schlupf-Kurve mit bekanntem Maximum erstellt wird. Diese angepasste µ-Schlupf-Kurve stellt anschließend die Grundlage dar und dient zur Optimierung des ABS-Systemes.

Eine vorteilhafte Ausgestaltung der Erfindung wird anhand eines Ausführungsbeispiels unter Bezugnahme auf die beigefügten Figuren erläutert. Es zeigen:
- Figur 1: ein Diagramm bezüglich der an einem Rad in Abhängigkeit vom Schlupf auftretenden Kräfte;
- Figur 2: einen Verlauf der Abhängigkeit einer gemessenen Schallamplitude und des entsprechenden Schlupfes;
- Figur 3: einen Verlauf einer optimalen ABS-Regelung über die Schallamplitude; sowie
- Figur 4: einen Ablaufplan eines Regelvorganges.

Elektronisch geregelte Bremssysteme sollen ein sicheres Führen eines Kraftfahrzeuges beim Bremsen gewährleisten. Da jede Bewegung oder Bewegungsänderung sich nur über Kräfte am Reifen erreichen lässt und diese Kräfte von verschiedenen Einflussgrößen abhängen, ist erforderlich, diese möglichst unmittelbar und schnell zu ermitteln, um eine präzise Regelung des Bremssystemes zu bewirken. Die Einflussgrößen sind zum Beispiel der Fahrbahnzustand, das Material aus dem die Fahrbahnoberfläche besteht, der Verschleißgrad der Fahrbahn, der Reifenzustand und der Reifentyp sowie Witterungseinflüsse. Die maximal übertragbare Kraft zwischen Reifen und Fahrbahn wird durch die Reibungskraft bestimmt, wobei die elektronischen Regelsysteme die Haftreibung optimal ausnutzen. Die Umfangskraft des Reifens, also diejenige, die in Längsrichtung des Reifens wirkt, wird über die Haftreibung als Bremskraft auf die Fahrbahn übertragen, wobei eine entscheidende Größe hierbei die Haftreibungszahl µ darstellt, die im Produkt mit der Normalkraft die maximal übertragbare Bremskraft festlegt. Die Haftreibungszahl µ wird durch die Materialpaarung zwischen Reifen und Fahrbahn, auftretende Witterungseinflüsse sowie durch die Geschwindigkeit des Fahrzeuges beeinflusst.

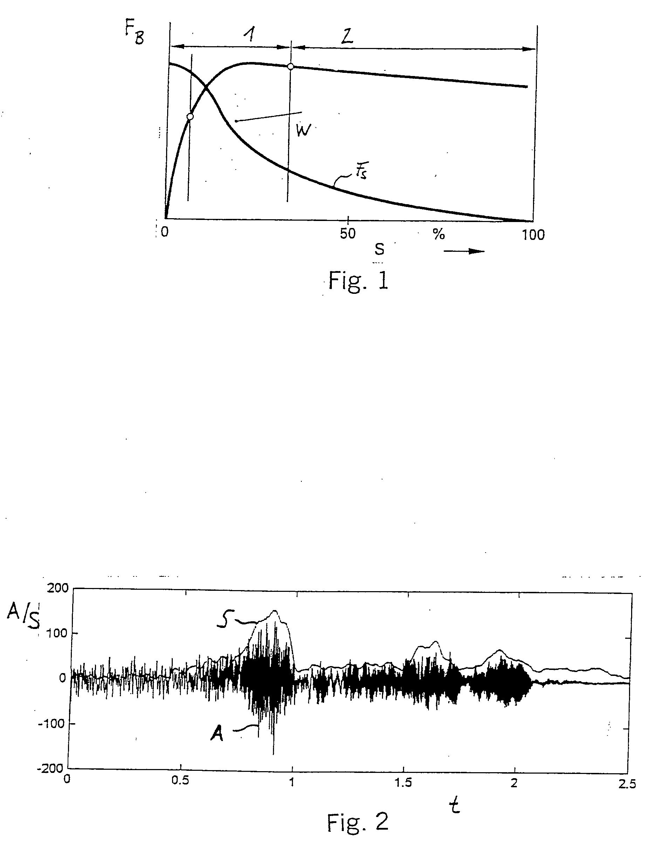

Eine Kraftübertragung zwischen dem Reifen und der Fahrbahn bewirkt stets ein elastisches Verformen und ein Gleiten des Reifens auf der Fahrbahn, so dass ein gewisses Maß an Schlupf vorhanden sein muss, um ein Fahrzeug auf herkömmliche Art und Weise abzubremsen. Der Zusammenhang zwischen Brems- und Seitenführungskräften und Schlupf bei Geradeausfahrt ist in der Figur 1 vereinfacht dargestellt, bei der die Bremskraft F_{B} und die Seitenführungskraft F_{S} über den Schlupf S aufgetragen ist. Bei geringen Schlupfwerten S steigt die Bremskraft F_{B} bis zu ihrem Höchstwert relativ steil an und fällt danach mit weiter steigenden Schlupfwerten langsam wieder ab. Der übliche Höchstwert der Bremskraft liegt zwischen 8 % bis 35 % Schlupf. Gleichzeitig nimmt die Seitenkraft F_{S} bei zunehmenden Schlupf ab, das heißt, die durch Lenkung oder äußere Störeinflüsse wie Seitenwind oder dergleichen übertragbare Kraft wird mit steigendem Schlupf S immer geringer. In dem Bereich zwischen 8 % und 35 % Schlupf S ist der Arbeitsbereich W eines Anti-Blockier-Systems in der Regel angesiedelt, da in diesem Bereich einerseits eine gute Bremskraftübertragung stattfindet und andererseits das Fahrzeug lenkbar bleibt. Der Bereich zwischen 0 % und 35 % Schlupf, in der Figur 1 mit 1 gekennzeichnet, wird als stabiler Bereich bezeichnet, während der Bereich 2 als instabiler Bereich gekennzeichnet ist, da die Seitenführungskräfte F_{S} stark abnehmen und das Fahrzeug nicht mehr lenkbar ist. Ein ABS-System in einem Fahrzeug soll verhindern, dass der stabile Bereich 1 verlassen wird, wobei ein Ziel des ABS-Regelsystemes ist, möglichst schnell den exakt notwendigen Bremsdruck aufzubauen, damit der Höchstwert der Bremskraft F_{B} erreicht wird. Je exakter der optimale Schlupfwert S für die jeweils gegenwärtig gegebenen Bedingungen ermittelt werden kann, desto schneller kann auf diesen Wert geregelt werden.

Das Verhältnis der Haftreibungszahl µ zu dem Schlupf S verläuft genauso wie die Kurve der Bremskraft F_{B}, da diese linear über die Normalkraft F_{N} miteinander gekoppelt sind.

Die herkömmlichen ABS-Regelsysteme nutzen das Maximum in der µ-Schlupf-Kurve des Reifens aus, wobei der Bremsdruck in dem Bremssystem soweit gesteigert wird, dass sich das Rad kurz vor dem Blockieren befindet. Die Radverzögerung wird über einen Sensor gemessen, wobei dieser Sensor als ein sogenannter Drehratensensor ausgebildet ist. Beim ersten Anbremsen ist der maximal mögliche Kraftschluss und damit die maximal übertragbare Bremskraft F_{B} unbekannt und muss zunächst ermittelt werden. Im Normalfall wird dabei das Maximum der µ-Schlupf-Kurve weit überschritten und das Rad in einen Bereich des hohen Schlupfes (20 bis 30 % ) gebracht. In den folgenden Regelzyklen wird dann langsam an den optimalen Punkt aus einem Bereich niedrigeren Schlupfes S herangeregelt, wobei das Ziel eine möglichst hohe Ausnutzung der Reibkraft, die der Reifen anbietet, ist. Bei dieser Art der Regelung wird nur die Verzögerung der Felge als Regelgröße berücksichtigt, nicht jedoch die eigentliche Kraftübertragung in der Bodenaufstandsfläche des Reifens.

Um eine möglichst unmittelbare Messung der möglichen Kraftübertragung zwischen Reifen und Fahrbahnoberfläche zu bewerkstelligen, ist es erfindungsgemäß vorgesehen, dass das Geräusch beim Bremsvorgang als Regelgröße verwendet wird. Im Bereich des Maximums der µ-Schlupf-Kurve befindet sich etwa die erste Hälfte der Bodenaufstandsfläche des Reifens im Haftbereich. Die hintere Hälfte fängt an zu gleiten und erzeugt ein charakteristisches Bremsgeräusch. Auf dem gleichen Fahrbahnbelag ist die Amplitude A des gemessenen Bremsgeräusches ein Maß für den Schlupf S, da die Amplitude A des Bremsgeräusches proportional zu den Schlupf S des Reifens ist. Deutlich ist dies in der Figur 2 in einem Bereich von t= 1,3 bis t= 1,7 zusehen, bei dem optimal an der maximalen Umfangskraft geregelt wird. Das Geräusch hat eine konstante Amplitude A. In diesem Bereich ist auch die Bremskraft B optimal. Wird das Optimum überschritten, steigt auch der Schallpegel an, was beispielsweise in den Bereich von t= 0,7 bis t= 1,0 zu sehen ist.

Statt der Zugrundelegung der Raddrehzahlsensoren wird unmittelbar das Geräusch beziehungsweise die Amplitude A des gemessenen Schallpegels beim Bremsen als Regelgröße verwendet und dem ABS-Regelkreis zugeführt. Auf Grund des proportionalen Verhältnisses der Amplitude A zu dem Schlupf S kann so unter Verwendung der üblichen Algorithmen zur Ermittlung der Absolut- beziehungsweise Referenzgeschwindigkeit und der Einbeziehung der Störgrößen wie Fahrbahnverhältnisse, Zustand der Bremsen und der Reifen, Gewicht des Fahrzeuges und Witterungseinflüsse die Stellgröße entsprechend verändert werden.

Auf der Grundlage der ermittelten Amplitude A des Schallpegels und der daraus ermittelten maximal übertragbaren Kraft wird dann der Gradient des Ansteigens der Bremskraftkopplung bestimmt, wodurch schnellstmöglich die maximal übertragbare Bremskraft F_{B} erreicht wird. Auf der Grundlage der Amplitude A des gemessenen Schallpegels wird zunächst der Schlupf S zwischen dem Reifen und dem Fahrbahnbelag bestimmt und daraus der optimale Wert der Bremskraft F_{B} errechnet, wodurch insgesamt ein schnelleres Regeln der Bremskraft F_{B} erfolgen kann.

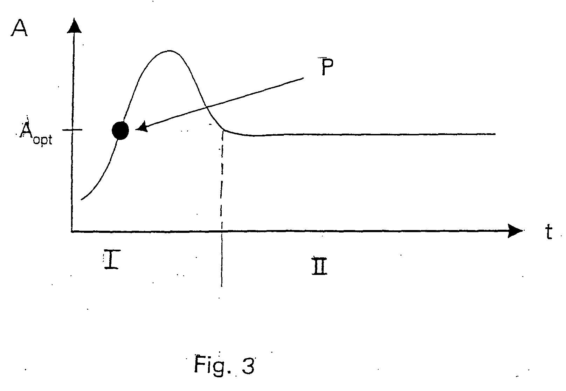

In der Figur 3 ist ein Verlauf einer optimalen ABS-Regelung mittels der Schallamplitude A über die Zeit t dargestellt. Die Regelung kann in zwei Phasen eingeteilt werden, nämlich Initialisierungsphase I, und in die Regelphase II. Während der Initialisierungsphase I wird das Fahrzeug zunehmend verzögert, wodurch der Schallpegel A ansteigt. Die Zunahme der Verzögerung erfolgt bis über den Arbeitspunkt B hinaus, bei der eine optimale Kraftübertragung zwischen dem Reifen und der Fahrbahn gegeben ist. Indem das Rad in dem Bereich hohen Schlupfes gebracht wird, wird die µ-Schlupf-Kurve ermittelt, und daraus werden die Daten für die gegenwärtigen Bedingungen beim Bremsen ermittelt. Anschließend wird der Bremsdruck reduziert, bis der auf Grund des Schlupfes S des verzögerten Fahrzeuges entstehende Schallpegel A den Wert Aₒₚₜ erreicht hat. Mit Erreichen von Aₒₚₜ ist die Initialisierungsphase I beendet und die Regelphase II beginnt, in der der Schallpegel A auf dem Wert Aₒₚₜ gehalten werden muss, um die maximale Kraft zwischen dem Reifen und der Fahrbahn zu übertragen.

Neben der dargestellten Regelung im Falle eines ABS-Systems ist es möglich, den gleichen Mechanismus für ein Anti-Schlupf-System oder eine Anfahrhilfe einzusetzen, bei der die maximal übertragbare Kraft des Antriebsstanges auf das optimale Niveau begrenzt wird, indem die Steigerung der Beschleunigung zunächst über ein optimales Maß hinaus erfolgt, dann jedoch auf Grund des gemessenen Schallpegels entsprechend verringert wird, bis der Schlupf S beim Beschleunigen ein Geräusch mit einem Schallpegel Aₒₚₜ verursacht.

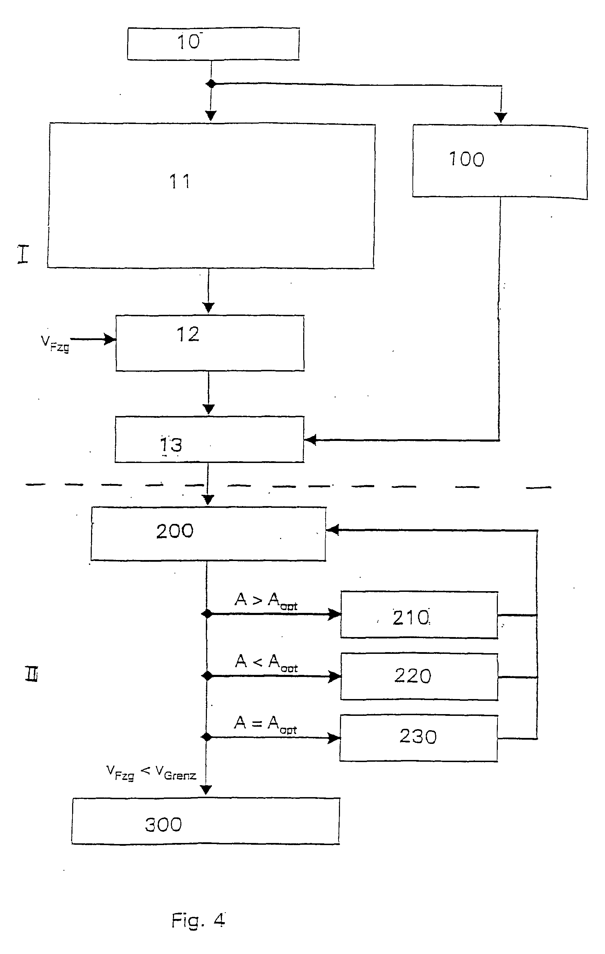

In der Figur 4 ist ein Beispiel für einen Regelvorgang einer Bremsung auf der Grundlage einer Geräuschmessung dargestellt, bei dem unmittelbar nach Bremsbeginn 10 eine Geräuschmessung 100 durchgeführt wird, bei der die Amplitude A des Schallpegels ermittelt wird. Parallel zu der Geräuschmessung 100 wird in Schritt 11 die Bestimmung des Maximums der zu übertragenen Kraft F_{B, max} über die Beobachtung der Raddrehzahlen durchgeführt. Die Beobachtung der Raddrehzahlen erfolgt über Radsensoren, wobei die Bestimmung der maximal übertragbaren Kraft durch einen Vergleich der Verzögerung des Rades mit dem Bremsdruck erfolgt. Ist die Verzögerung eines Rades überproportional stark im Verhältnis zu dem Bremsdruck, ist das Maximum der Bremskraft überschritten und anhand der gemessenen und gegebenenfalls gespeicherten Werte kann die maximal übertragbare Kraft F_{B,max} ermittelt werden.

In Schritt 12 werden Daten über die Fahrzeuggeschwindigkeit V_{fzg} zugeführt, so dass auf Grund der Fahrzeuggeschwindigkeitsdaten eine Bestimmung des Schlupfes S bei der maximal übertragbaren Kraft F _{B,max} erfolgt. Anhand der parallel durchgeführten Geräuschmessung 100 kann in Schritt 13 die Bestimmung der Amplitude Aₒₚₜ bei demjenigen Wert des Schlupfes S erfolgen, bei dem die übertragbare Kraft F _{B} maximal ist. Mit der Bestimmung von Aₒₚₜ in Verfahrensschritt 13 ist die Initialisierungsphase I abgeschlossen und das ABS-System kann nun in die eigentliche Regelphase II eintreten.

In dieser Regelphase II wird auf Grund der fortgesetzten Geräuschmessung im Schritt 200 die Amplitude A des Schallpegels gemessen und nachfolgend mit dem ermittelten Wert Aₒₚₜ verglichen. Ist der gemessene Amplitudenwert größer als Aₒₚₜ, wird, wie in Schritt 210 gezeigt, der Bremsdruck verringert und es wird zu Schritt 200 zurückgekehrt, wobei weiterhin die Amplitude A des Schallpegels gemessen wird. Falls die gemessene Amplitude kleiner als Aₒₚₜ ist, wird, wie in Schritt 220 gezeigt, der Bremsdruck vergrößert, wodurch gleichzeitig der Schallpegel ansteigt bis er den optimalen Wert erreicht hat und sich das ABS-System in seinem Arbeitspunkt P befindet. Sofern der gemessene Amplitudenwert A mit dem optimalen Wert Aₒₚₜ übereinstimmt, wird der Bremsdruck, wie in Schritt 230 gezeigt, gehalten, da dieser Wert dem Wert der Amplitude dem Arbeitspunkt P entspricht, wie er in der Regelphase II in der Figur 3 gezeigt ist.

Sobald die Fahrzeuggeschwindigkeit V_{fzg} eine Grenzgeschwindigkeit V_{grenz} unterschritten hat, wird die Regelung abgebrochen und es erfolgt der Austritt aus der Regelphase gemäß Schritt 300, um das Fahrzeug überhaupt vollständig zum Stehen zu bringen.

Grundsätzlich ist es auch hier möglich, statt einer Regelung eines ABS-Systems eine Anti-Schlupf-Regelung durchzuführen, wobei statt der Ermittlung der Bremskraft FB die maximal zu übertragene Antriebskraft ermittelt wird; statt der Veränderung des Bremsdruckes erfolgt eine Veränderung der bereitgestellten Leistung mittels einer automatischen Drosselung, so dass bei Überschreiten eines optimalen Wertes Aₒₚₜ ein Durchdrehen der Reifen beim Beschleunigen entsprechend verhindert wird.

## Patentansprüche

1. Verfahren zur Bestimmung der maximal übertragbaren Kraft zwischen einem Reifen und einem Fahrbahnbelag beim Bremsen oder Beschleunigen eines Fahrzeuges, **dadurch gekennzeichnet, dass** beim Bremsen oder Beschleunigen der Schallpegel in der Umgebung des Reifens gemessen wird und dass anhand einer zuvor ermittelten µ-Schlupf-Kurve die Amplitude (A) des gemessenen Schallpegels als Regelgröße eines ABS-Systems oder einer Anti-Schlupf-Regelung verwendet wird.

2. Verfahren nach Anspruch 1, **dadurch gekennzeichnet, dass** die µ-Schlupf-Kurve auf der Grundlage einer ersten Bremsung aus Radsensorsignalen ermittelt wird.

3. Verfahren nach Anspruch 1 oder 2, **dadurch gekennzeichnet, dass** mit Radsensoren die Raddrehzahl erfasst wird, dass mit einem Steuergerät zur Auswertung der Radsensorsignale über einen Algorithmus die Absolutgeschwindigkeit des Fahrzeuges bestimmt wird und dass über die Differenz der jeweiligen Radgeschwindigkeit zu der Absolutgeschwindigkeit der Schlupf (S) errechnet wird.

4. Verfahren nach einem der voranstehenden Ansprüche, **dadurch gekennzeichnet, dass** der Schallpegel am Reifenein- oder -auslauf gemessen wird.

5. Verfahren nach einem der voranstehenden Ansprüche, **dadurch gekennzeichnet, dass** der Kraftschluß zwischen Reifen und Fahrbahnbelag bei Wechsel des Fahrbahnbelages bestimmt wird.

6. Verfahren nach einem der voranstehenden Ansprüche, **dadurch gekennzeichnet, dass** zur Bestimmung des Kraftschlusses Zusatzparameter wie Fahrzeuggeschwindigkeit, Temperatur oder Feuchtigkeit ermittelt und berücksichtigt werden.

7. Verwendung der in dem Verfahren nach einem der voranstehenden Ansprüche ermittelten maximal zu ermittelnden Kraft zur Regelung eines Antiblockiersystems, indem über die gemessene Amplitude (A) des Schallpegels der Gradient des Ansteigens der Bremskraftkopplung bestimmt wird.

8. Verwendung nach Anspruch 7, **dadurch gekennzeichnet, dass** beim ersten Bremsen bis zum Blockieren des Rades im Bereich von 8 -35% Schlupf aus einer voreingestellten µ-Schlupf-Kurve gebremst wird, dass aufgrund der durch die erste Bremsung erhaltenen Daten eine angepaßte µ-Schlupf-Kurve erstellt wird, die als Grundlage für eine Korrelation zwischen der Lage des Maximums des Schlupfes (S) und der Amplitude (A) des Geräuschpegels dient.
